# EUROPEAN PATENT SPECIFICATION

(11) **EP 0 725 742 B1**
(45) Date of publication and mention of the grant of the patent: **08.03.2000**
(21) Application number: 93921130.6
(22) Date of filing: 01.09.1993
(51) Int. Cl.: B60R 25/00, E05B 67/00, B62H 5/00

(54) **ANTI-THEFT DEVICE**
DIEBSTAHLSICHERUNGSVORRICHTUNG
DISPOSITIF ANTIVOL

(43) Date of publication of application: 14.08.1996
(73) Proprietor: Heuwest Beheer B.V., 3784 LZ Terschuur (NL)
(72) Inventor: VAN HEUGTEN, Antonius, Maria, NL-3811 MB Amersfoort (NL); VAN HEUGTEN, Theodor, Maria, NL-3781 NM Voorthuizen (NL)
(74) Representative: Ferguson, Alexander
(86) International application number: NL9300175
(87) International publication number: WO9506578

(56) References cited:
- EP-A- 0 034 554
- EP-A- 0 261 571
- DE-A- 4 220 942
- DE-C- 132 445
- US-A- 2 180 117
- US-A- 3 934 436
- US-A- 4 536 754

## Description

The invention relates to an anti-theft device for securing objects such as cars, motorbicycles and other valuable durables against theft as described in the preamble of claim 1.

Such an anti-theft device is known from US-A-3.934.436.

Vehicles are a sought-after object for thieves. The owners of cars, motor bicycles, mopeds and bicycles etc. have to take more and more care to protect their vehicle from theft. For this end burglar alarms are built into cars or lock bars are installed between the gear lever and a fixed point in the car and motor bicycles, mopeds and bicycles are ensured against removal with at least two locking systems (cable or chain with lock). These locking systems always have to be carried along with the vehicle. In the case of cars the consequence is that there are objects lying around the passenger space in an annoying way. In the case of motor-bicycles the limited luggage-space has to be used for temporarily storing the locking system. Luggage-space of that kind is usually not found in mopeds or bicycles, so that the locking systems have to then be hung onto the bicycle and often form an annoying object for the user. Besides, securing a moped/bicycle with several locking systems is quite a bother, especially if the moped/bicycle has to be fastened to a rack. In these cases the user often has to crawl in between other mopeds/bicycles, in the course of which clothing can easily be damaged or soiled. Moreover, the inconvenience which the user experiences when carrying several locking systems can result in the user choosing lighter locking systems designs, in spite of them being less effective.

The anti-theft device disclosed in US-A-3.934.436 comprises an elongated, flexible means such as a cable, which has an engagement end formed by a cable eye or thimble, into which a padlock can be hooked, as well as a base member, which can be anchored into the ground and is provided with a receiving space for the cable, one end of the cable remaining permanently in the receiving space. The other cable end, the engagement end, projects out of the anti-theft device so that it can easily be grasped by the user.

DE-C-132.445 discloses a securing arrangement for bicycles comprising a chain which is fastened with one end to the bottom of a small box, which box is mounted on the bicycle itself.

EP-A-0.034.554 discloses an arrangement for putting away bicycles comprising a column accommodating a cable and a storage box mounted on top of the column. The engagement end of the cable projects sidewards from the column upper end, just below the box. In one of its sides the storage box is provided with a lid. This lid not only closes off the storage space in the box but also cooperates with the edge of the box opening to secure the engagement end of the cable when the cable is in use and extends outward from the column, through an aperture in the bicycle, and to the lid of the box.

It can be desirable to reduce the number of parts of the anti-theft device of the kind described in the preamble which are in view or in the way as far as possible. Aesthetic reasons can underlie this, but a particular situation can be considered in which the anti-theft device is incorporated in a paving, the receiving space only projecting to a small extent from the pavement. Although this would form an aesthetically very acceptable arrangement, projecting engagement ends of the flexible means, such as a cable or a chain, which extend up to the street surface could form a risk of tripping up.

To solve this the anti-theft device according to the invention is characterized in that it is made such that the base member further comprises a chamber for the engagement end of the flexible means, wherein the chamber has a wall (11) which is provided with a passage opening (12) for the flexible means (21) to the receiving space (7). This chamber is preferably provided with a locking means which can be operated by the user, such as a lid, which can be placed between a position in which the engagement end is in the user's reach, and a position in which the chamber is at least substantially locked. The user only has to bend down to open the chamber and then to grasp and lift up the engagement end.

So as to reduce the danger of tripping up even further and to as far as possible preserve the aesthetic value of an (ornamental) paving, the base member with receiving space and chamber is completely recessed in the fixed body. The upper side of the chamber is then flush with the remaining ground surface. A corresponding application is possible for walls. Particularly in the embodiment of the anti-theft device according to the invention incorporated in the paving, the pavement remains substantially level, without parts projecting.

This recessed arrangement of the anti-theft device according to the invention can also be used in other situations, in which projecting parts are not desired. Here the anchoring of fencing can be considered, in which there would be no additional obstacles in the opening of the fence as a result of the recessed arrangement of the anti-theft device. Use on (historic) squares for securing stacks of terrace chairs in the summer season can also be considered. Furthermore, large public areas where objects are displayed before an event and remain unattended for a long period are worth considering. Other applications can be found in securing containers and use as cheap and handy alternative for wheel clamps for wrongly parked cars.

Preferably the chamber and the receiving space initially form loose parts, which are assembled in the anti-theft device and are therein connected to each other in a permanent way in the using mode. In particular if the chamber itself has the wall of the receiving space which is provided with a passage opening, the manufacture of the base member can then be easy. Moreover, a reduced number of different base members can suffice, as only the chamber, within certain ranges, has to be geared to a certain weight/strength of the flexible means, which is reflected in the desired cross section of the passage opening.

At its other end the flexible means can be fixedly attached to the base member. It is preferable, however, to have the flexible means substantially separate from the base part, to which purpose the other end of the flexible means is designed in relation to the passage opening so as to remain on the side of the wall turned away from the user's side. Hereby almost the complete length of the flexible means can be used, while installation operations and means can be saved on.

To prevent the flexible means coming to rest for a large part of its length outside the receiving space and then forming a risk for, among others, pedestrians, preferably in the anti-theft device according to the invention means are provided for tensioning or urging the flexible means in a direction towards the receiving space. In case the receiving space is directed substantially vertically, the flexible means can be provided with an additional weight, but in most cases using the own weight of the flexible means, especially if this has the form of a chain, will suffice. If the receiving space is incorporated in a wall and then in most cases projects horizontally, the force of gravity cannot be utilized, and the tensioning means will be designed as a spring, of which the one end is attached to the base member and the other end is attached to the flexible means.

The invention will now be explained on the basis of the following discussion of a number of merely exemplary embodiments shown in the accompanying drawing, in which:
figure 1 is a vertical cross section of a first preferred embodiment of the anti-theft device according to the invention;
figure 2 is a detail of the device shown in figure 1, relating to the chamber located at the top;
figure 3 is a schematic example of an application of the device according to figure 1;

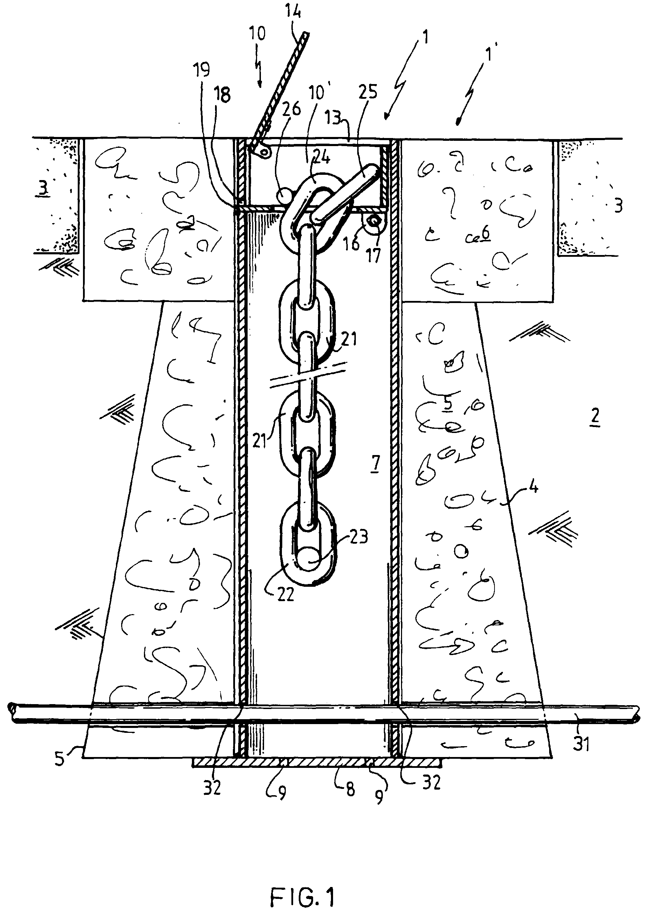

The anti-theft device 1 which is shown in figure 1 is accommodated in the ground 2, which can, for example, be built up of sand and is covered by pavement 3, for example paving brick. The anti-theft device 1 comprises a base member 1', which comprises a concrete body 4 and a vertical steel sleeve 7 accommodated therein. The concrete body 4 is made of one piece and comprises a frusto-conical or pyramid shaped lower part 5, which for anchoring purposes is provided with a casing surface turned slantwise upwards, and a plate-shaped upper member 6, the top of which is flush with the top of the paving bricks 3.

The steel sleeve 7, which can be square or circular in cross section, is treated against rust and is attached to a baseplate 8, which projects laterally so as to engage behind the lower side of the concrete lower member 4 and thus prevent the sleeve from being pulled up out of the concrete body, and is provided with drainage holes 9, for drainage of rainwater which has got into the sleeve to the ground 2.

In the side walls of the sleeve 7 holes 32 are arranged, through which one or two steel rods 31 extend. These rods 31 extend through the concrete member 5 and into the ground for providing an anchorage.

Alternatively, the plate 8 could be omitted, in which case the rods 31 would then ensure that the sleeve is retained in relation to the concrete body.

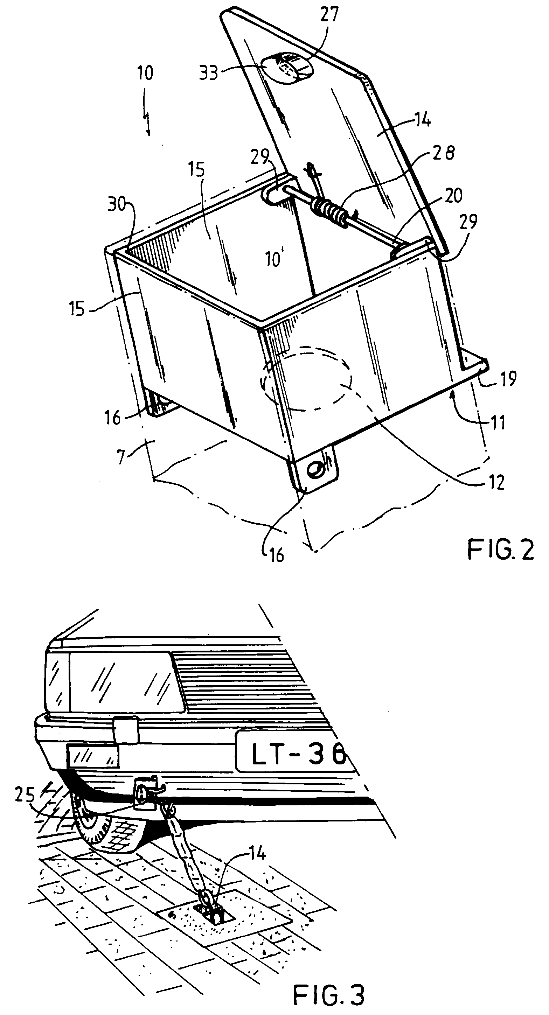

On the top the sleeve-shaped receiving space 7 is bounded by a box or upper chamber which itself is bounded by a bottom 11 and a peripheral wall 15. Vide also figure 2. The bottom 11 is provided with a hole 12 and extended to beyond the peripheral wall 15 by projecting rib 19. On the lower side of the bottom 11 two ears 16 are integrally formed, which are provided with holes for receiving a bolt. On the top the upper opening 13 of the chamber 10 is lockable by means of lid 14, which is provided with a hole 27, in which a user's finger can be inserted, and which is provided on both sides, at a level with the hinge pin, with bearing blocks 29 formed thereon, through which the hinge pin 20 extends to be journalled into bearing holes in the peripheral wall 15. Below the hole 27 there is a small plate 33, which is attached with a wall 34 to the underside of the lid 14 to thus prevent water and dirt falling into the chamber 10. If so desired the lid 14 can itself be lockable.

By means of a helical coil spring 28, which is attached with its one end to the underside of the lid 14 and with its other end attached to the inner surface of the peripheral wall 15, the lid 14 is biassed to a position closing off the upper opening 13 of the chamber 10. The lid 14 then rests on the upper edge 30 of the peripheral wall 15 and also flush with the upper surface of the concrete upper member 6 of the base member 1'. Instead of the spring 28 a hinge with built-in spring can be used.

The chamber shown in figure 2 can be manufactured and treated as loose part. When assembling the anti-theft device of figure 1 the chamber, with the rib 19 ahead, is inserted in the top of the sleeve 7 to have its rib 19 accommodated in the transverse slot 18 which is arranged for that purpose in the sleeve 7. Then the other side of the chamber 10 is lowered until the ears 16 formed onto the bottom 11 are aligned with their holes in corresponding holes which are made in the wall of the sleeve 7. After that a through going bolt with countersunk head 17 is inserted through these holes and secured by a nut, so that the chamber is locked in position in the top of the sleeve 7. Then the assembly of the sleeve 7 with chamber 10 is inserted from below in the prefabricated concrete member 4, until the baseplate 8 abuts the underside of the lower member 5. In this position the anti-theft device 1 is placed in an excavation in the ground 2, after which the ground is then replenished. For an improved anchoring of the device use can furthermore be made of the above mentioned rods extending in transverse direction, which project from the concrete member 4.

Instead of using the concrete prefabricated body 4 it is also possible to pour concrete in situ, after the sleeve has been placed in an excavation. When using rods these are then inserted through the sleeve and are also poured into the concrete. If so desired they can come to rest on the under side of the concrete body. Should the occasion arise the concrete members can also be omitted, by making the anchoring rods sufficiently long and thick or by providing them with special anchoring means such as baffle plates. The anti-theft device, in which the sleeve then forms the base member, will then only take up a very modest surface area (sleeve cross section) of the road surface.

A chain 21 hangs in the sleeve 7 the lowest link 22 of which is provided with a transverse pin 23 which is welded to it and has a length (in the direction transverse to the plane of the drawing), which is larger than the diameter of the hole 12 in the bottom 11 of the chamber 10. Consequently it is not possible to pull the chain 21 entirely out of the sleeve 7. At the upper end, the engagement end 24, 25 of the chain 21 the link 24 is also provided with a transverse pin 26 which is welded onto it and which has a length (seen in a direction perpendicular to the plane of the drawing) that is larger than the diameter of the hole 12. As a result the link 24 cannot fall through the hole to below, and the user can at any time engage the above located link 25, after the user has flipped open the lid. In this embodiment one of both transverse pins 23, 26 is welded to the link in question after the chain 21 has been led through the hole 12. When assembling the chamber 10 is placed in the sleeve 7 at the same time as the chain 21.

The uppermost link 25 is equal to the other link (or can, alternatively, have a larger diameter) and can be pulled by the user to the object to be secured. If this object to be secured is a car (vide figure 3) then there will be a tow eye. This tow eye can be joined with the engagement eye 25 by means of a padlock or the like.

If no eye of that kind is at hand on the object to be secured, the chain-shaped character of the flexible means 21 can be used, and the chain 21 can be put around a part of the object to be secured, in the case of a motor cycle or moped/bicycle about one of the frame tubes, to bring the link 25 to another, possibly enlarged link 21, after which both parts can be joined together by means of a padlock or the like.

It is also possible to use a padlock with a large arch and to then put this arch around part of the object to be secured and put it through the eye 25 and then to close the lock. The box 10 is moreover suitable for storing the lock, for example a padlock, secured to the link 25. In that case the user or the (joint) users of the anti-theft device do not even need to carry a lock with them, just a key for it.

## Claims

1. Anti-theft device (1) for objects, in particular vehicles, comprising an oblong flexible means(21) that is provided with an attaching means, (25) in particular an eye, at the engagement end which the user takes hold of, for attachment by means of a lock to the object, and a base member (1'), which is intended to be attached in an anchored way to a fixed body such as a ground (2) provided with a paving (3) or as a wall and is provided with a receiving space (7) for the flexible means, wherein the flexible means is incorporated with its other end (22) in the receiving space in a permanent way and is situated with its engagement end at a location which is within reach of the user, wherein at the user's side the receiving space is limited by a wall (11), which is provided with an opening (12) for the passage of the flexible means (21), wherein the engagement end of the flexible organ is shaped in relation to the passage opening so as to remain on the user's side of the wall, characterized in that the base member (1') further comprises a chamber or box (10) for the engagement end (25) of the flexible means (21), wherein the chamber has a wall (11) which is provided with a passage opening (12) for the flexible means (21) to the receiving space (7).

2. Anti-theft device according to claim 1, wherein the chamber (10) is provided with a locking means (14) which can be operated by the user such as a lid, which can be placed between a position in which the engagement end (25) is in the user's reach, and a position in which the chamber (10) is at least substantially locked.

3. Anti-theft device according to claim 1 or 2, wherein the chamber or box (10) and the receiving space (7) initially form loose parts, which are assembled in the anti-theft device and are therein connected to each other in a permanent way in the using mode.

4. Anti-theft device according to any one of the preceding claims, wherein the receiving space is formed by a sleeve (7).

5. Anti-theft device according to claim 4, wherein the base member (1') comprises a concrete body (4), in which the sleeve is placed, and wherein means such as rods (31) and/or flange plates (8) are present for fixing the sleeve in an outgoing direction in relation to the concrete body.

6. Anti-theft device according to claim 4, wherein the chamber or box (10) is accommodated in the sleeve (7), at one end thereof.

7. Anti-theft device according to any one of the claims 1-6, wherein the other end (22) of the flexible means (21) is designed in relation to the passage opening (12) so as to remain on the side of the wall (11) turned away from the user's side.

8. Anti-theft device according to any one of the preceding claims, comprising means (21) for tensioning the flexible means in a direction towards the receiving space.

9. Anti-theft device according to claim 8, wherein the tensioning means are formed by the weight of at least a part of the flexible means (21).

10. Anti-theft device according to claim 8, wherein the tensioning means comprise a spring.

11. Anti-theft device according to any one of the preceding claims, wherein the flexible means is formed by a chain (21).

12. Assembly, of a solid body such as a ground (2) provided with paving (3) or a wall, and an anti-theft device (1) according to any one of the preceding claims, wherein the receiving space (7) of the anti-theft device is for the greater part recessed or accommodated in the solid body.

13. Assembly according to claim 12, wherein the base member (1') is entirely accomodated in the solid body.

14. Assembly according to claim 12 or 13, comprising anchoring means (4) for anchoring connection of the base member and the solid body.

15. Assembly according to claim 14, wherein the anchoring means are formed by a lateral thickening (5) of the base member, such as a column base.

16. Assembly according to claim 14 or 15, wherein the anchoring means comprise anchoring rods (31), which extend into the solid body (2) through holes in the base member.

## Patentansprüche

1. Antidiebstahlvorrichtung (1) für Objekte, insbesondere Fahrzeuge, umfassend eine längliche flexibele Einrichtung (21) das an dem von dem Benutzer anzufassenden Angriffsende von einem Befestigungsmittel (25), insbesondere einer Öse, für Befestigung mittels eines Schlosses an dem Gegenstand versehen ist und ein Sockelelement (11), das vorgesehen ist um auf verankerte Weise an einem festen Körper, wie einem von Straßendecke (3) versehenen Boden (2) oder einer Wand befestigt zu werden und von einem Aufnahmeraum (7) für die flexibele Einrichtung versehen ist, wobei die flexibele Einrichtung mit ihrem anderen Ende (22) permanent in dem Aufnahmeraum aufgenommen ist und mit ihrem Angriffsende auf einer für den Benutzer erreichbaren Stelle gelegen ist, versehen ist, wobei der Aufnahmeraum an der Benutzerseite von einer Wand (11) begrenzt ist, die von einer Öffnung (12) für Durchgang von der flexibelen Einrichtung (21) versehen ist, wobei das Angriffsende der flexibelen Einrichtung hinsichtlich der Durchgangsöffnung geformt ist, um an der Benutzerseite der Wand zu bleiben, **dadurch gekennzeichnet**, daß das Sockelelement (11) weiter eine Kammer oder Kasten (10) für das Angriffsende (25) der flexibelen Eirichtung (21) umfaßt, wobei die Kammer eine Wand (11) hat, die von einer Durchgangsöffnung (12) für die flexibele Vorrichtung (21) zu dem Aufnahmeraum (7) versehen ist.

2. Antidiebstahlvorrichtung gemäß Anspruch 1, worin die Kammer (10) von einem von dem Benutzer zu bedienenden Verschlußmittel (14) wie einem Deckel versehen ist, das zwischen einem Stand, worin das Angriffsende (25) für den Benutzer erreichbar ist, und einem Stand, worin die Kammer (10) mindestens nahezu ganz abgeschlossen ist, gesetzt werden kann.

3. Antidiebstahlvorrichtung gemäß Anspruch 1 oder 2, worin die Kammer oder Kasten (10) und der Aufnahmeraum (7) anfänglich einzelne Unterteile bilden, die in der Antidiebstahlvorrichtung zusammengesetzt sind und darin im Benutzerstand permanent mit einander verbunden sind.

4. Antidiebstahlvorrichtung gemäß einem der vorhergehenden Ansprüche, wobei der Aufnahmeraum durch eine Hülse (7) gebildet wird.

5. Antidiebstahlvorrichtung gemäß Anspruch 4, wobei das Sockelelement einen Betonkörper (4) umfaßt, worin die Hülse gesetzt ist, und worin Mittel wie Stäbe (31) und/oder Börderbleche (8) vorhanden sind, um die Hülse hinsichtlich des Betonkörpers in abgehender Richtung festzulegen.

6. Antidiebstahlvorrichtung gemäß Anspruch 4, worin die Kammer oder Kasten (10) in einem Ende der Hülse (7) aufgenommen ist.

7. Antidiebstahlvorrichtung gemäß einem der Ansprüche 1-6, wobei das andere Ende (22) der flexibelen Einrichtung (21) hinsichtlich der Durchgangsöffnung (12) gebildet ist, um an der von der Benutzerseite abgekehrten Seite der Wand (11) zu bleiben.

8. Antidiebstahlvorrichtung gemäß einem der vorhergehenden Ansprüche, umfassend Mittel (21) für das Spannen der flexibelen Einrichtung in eine Richtung zu dem Aufnahmeraum.

9. Antidiebstahlvorrichtung gemäß Anspruch 8, worin die Spannmittel durch das Gewicht von zumindest einem Teil der flexibelen Einrichtung (21) gebildet werden.

10. Antidiebstahlvorrichtung gemäß Anspruch 8, wobei die Spannmittel eine Feder umfassen.

11. Antidiebstahlvorrichtung gemäß einem der vorhergehenden Ansprüche, wobei die flexibele Einrichtung durch eine Kette (21) gebildet wird.

12. System eines festen Körpers wie eines von Straßendecke (3) versehenen Bodens (2) oder einer Wand, und einer Antidiebstahlvorrichtung (1) gemäß einem der vorhergehenden Ansprüche, worin der Aufnahmeraum (7) der Antidiebstahlvorrichtung größtenteils im festen Körper versenkt oder aufgenommen ist.

13. System gemäß Anspruch 12, wobei das Sockelelement (11) vollständig im festen Körper aufgenommen ist.

14. System gemäß Anspruch 12 oder 13, umfassend Ankermittel (4) für verankerte Verbindung des Sockelelements und des festen Körpers.

15. System gemäß Anspruch 14, wobei die Ankermittel durch eine seitwärtse Verdickung (5) des Sockelelements, wie eines Fundamentsockels, gebildet werden.

16. System gemäß Anspruch 14 oder 15, wobei die Ankermittel Ankerstäbe (31) umfassen, die sich durch Löcher im Sockelelement bis in den festen Körper erstrecken.

## Revendications

1. Appareil antivol (1) d'objets, notamment de véhicules, qui comprend un dispositif souple et allongé (21) qui est muni d'un dispositif de fixation (25), en particulier d'un oeillet, à l'extrémité de coopération que saisit l'utilisateur pour le fixer par un verrou à l'objet, et un organe de base (1') qui est destiné à être fixé de manière ancrée à un corps fixé, par exemple au sol (2) ayant un revêtement (3) ou à un mur, et qui comporte un espace de logement (7) du dispositif souple, dans lequel le dispositif souple est incorporé avec son autre extrémité (22) dans l'espace récepteur de manière permanente et est disposé avec son extrémité de coopération à un emplacement qui se trouve à la portée de l'utilisateur,
dans lequel, du côté de l'utilisateur, l'espace récepteur est limité par une paroi (11) ayant une ouverture (12) pour le passage du dispositif souple (21), l'extrémité de coopération de l'organe souple ayant une configuration qui dépend de l'ouverture du passage afin qu'elle reste du côté de la paroi tourné vers l'utilisateur, caractérisé en ce que :
l'organe de base (1') comporte en outre un caisson ou chambre (10) pour l'extrémité de coopération (25) du dispositif souple (21), dans lequel la chambre a une paroi (11) qui a une ouverture de passage (12) du dispositif souple (21) vers l'espace de logement (7).

2. Appareil antivol selon la revendication 1, dans lequel la chambre (10) comporte un dispositif de blocage (14) qui peut être manoeuvré par l'utilisateur, tel qu'un couvercle qui peut âtre placé entre une position dans laquelle l'extrémité de coopération (25) est à la portée de l'utilisateur et une position dans laquelle la chambre (10) est au moins pratiquement bloquée.

3. Appareil antivol selon la revendication 1 ou 2, dans lequel le caisson ou chambre (10) et l'espace de logement (7) forment initialement des parties libres qui sont assemblées dans l'appareil antivol et sont ainsi raccordées mutuellement de manière permanente en mode d'utilisation.

4. Appareil antivol selon l'une quelconque des revendications précédentes, dans lequel l'espace de logement est formé par un manchon (7).

5. Appareil antivol selon la revendication 4, dans lequel l'organe de base (1') est un corps de béton (4) dans lequel est placé le manchon, et dans lequel un dispositif tel que des barres (31) et/ou des plaques à flasque (8) est présent pour la fixation du manchon pour l'empêcher de se déplacer vers l'extérieur par rapport au corps de béton.

6. Appareil antivol selon la revendication 4, dans lequel le caisson ou chambre (10) est logé dans le manchon (7) à une première extrémité de celui-ci.

7. Appareil antivol selon l'une quelconque des revendications 1 à 6, dans lequel l'autre extrémité (22) du dispositif souple (21) est réalisée en fonction de l'ouverture (12) de passage afin qu'elle reste du côté de la paroi (11) opposé au côté de l'utilisateur.

8. Appareil antivol selon l'une quelconque des revendications précédentes, comprenant un dispositif (21) de mise sous tension du dispositif vers l'espace de logement.

9. Appareil antivol selon la revendication 8, dans lequel le dispositif de mise sous tension est formé par le poids d'une partie au moins du dispositif souple (21).

10. Appareil antivol selon la revendication 8, dans lequel le dispositif de mise sous tension comprend un ressort.

11. Appareil antivol selon l'une quelconque des revendications précédentes, dans lequel le dispositif souple est formé par une chaîne (21).

12. Ensemble d'un corps solide, tel qu'un sol (2) ayant un revêtement (3) ou un mur, et d'un appareil antivol (1) selon l'une quelconque des revendications précédentes, dans lequel l'espace de logement (7) de l'appareil antivol est en retrait ou logé dans le corps solide pour sa plus grande partie.

13. Ensemble selon la revendication 12, dans lequel l'organe de base (1') est entièrement logé dans le corps solide.

14. Ensemble selon la revendication 12 ou 13, comprenant un dispositif d'ancrage (4) destiné à ancrer l'organe de base au corps solide.

15. Ensemble selon la revendication 14, dans lequel le dispositif d'ancrage est formé par un épaississement latéral (5) de l'organe de base, par exemple une base de colonne.

16. Ensemble selon la revendication 14 ou 15, dans lequel le dispositif d'ancrage comprend des barres d'ancrage (31) qui s'étendent dans le corps solide (2) par des trous formés dans l'organe de base.
